# EUROPÄISCHE PATENTSCHRIFT

(11) **EP 3 503 335 B1**
(45) Veröffentlichungstag und Bekanntmachung des Hinweises auf die Patenterteilung: **03.06.2020**
(21) Anmeldenummer: 19156510.0
(22) Anmeldetag: 16.02.2012
(51) Int. Cl.: H02J 3/16

(54) **VERFAHREN UND VORRICHTUNG ZUR STABILISIERUNG DES NETZBETRIEBS EINES ENERGIEVERSORGUNGSNETZES**
METHOD AND DEVICE FOR STABILISING THE POWER SUPPLY OPERATION OF AN ENERGY SUPPLY NETWORK
PROCÉDÉ ET DISPOSITIF DE STABILISATION DU FONCTIONNEMENT RÉSEAU D'UN RÉSEAU D'ALIMENTATION EN ÉNERGIE

(30) Priorität: 01.03.2011 DE 102011012695
(43) Veröffentlichungstag der Anmeldung: 26.06.2019
(62) Teilanmeldung aus: 12000995.6
(73) Patentinhaber: BOB Holding GmbH, 97332 Volkach (DE)
(72) Erfinder: BECK, Bernhard, 97332 Volkach (DE)
(74) Vertreter: FDST Patentanwälte

(56) Entgegenhaltungen:
- EP-A2- 2 175 540

## Beschreibung

Die Erfindung betrifft ein Verfahren zur Stabilisierung des Netzbetriebs eines elektrischen Energieversorgungsnetzes mit einem ersten Netzverknüpfungspunkt an einen Energieerzeuger (Energielieferant) einer ersten Spannungsebene und mit einem an eine zweite Spannungsebene (Obernetz) angebundenen zweiten Netzverknüpfungspunkt sowie mit einer Anzahl dritter Netzverknüpfungspunkte zu jeweils zugeordneten Verbrauchnern. Sie betrifft weiter eine Vorrichtung zur Durchführung des Verfahrens.

Aus der EP 2 175 540 A2 ist ein Windparksystem bekannt, bei dem eine Vielzahl an Windparks mit jeweils mehreren Windturbinen an ein Versorgungsnetz angeschlossen ist. Einer zentralen Steuereinheit werden als Eingangsdaten ein Spannungsreferenzsignal und der als Referenz dienende Ort zugeführt. Des Weiteren werden an den Zentralrechner die Strom- und Spannungswerte auf der Übertragungsleitung zwischen dem Sammelpunkt aller Windparks und einem Anschlusspunkt im Netz sowie die elektrischen Parameter an einem Messpunkt und die Daten der einzelnen Windfarmen geleitet. Aus diesen Eingangsdaten errechnet der Leitrechner den Betrag jedes einzelnen Windparks, der zur Erreichung der Vorgaben am Regelpunkt erforderlich ist. Sollte ein Windpark nicht in der Lage sein, seinen errechneten Anteil beizusteuern, so wird auf andere Windparks verteilt. Wenn das Potential aller Windparks ausgeschöpft ist, so wird als letzter Schritt die Spannung am Regelpunkt abgesenkt.

Vorliegend wird unter Energieversorgungsnetz jeder Netzbereich verstanden, dem Spannungsmesswerte, Verknüpfungspunkte, Wechselrichter und Transformatoren zugeordnet sind. Dies kann ein lokaler Bereich, wie zum Beispiel ein Betriebsgelände eines größeren Unternehmens, eine Ortschaft, eine Großstadt oder ein Stadtteil hiervon sein. Auf diese Weise kann jede gewünschte Infrastruktur zu einem Versorgungsnetz definiert werden, sofern die minimal geforderten Komponenten vorhanden sind. Ein derartiges Energieversorgungsnetz, dass mit einem zugehörigen Obernetz über einen Transformator verbunden ist, umfasst mehrere Versorgungsebenen, nämlich eine Niederspannungsebene bis 1 KV, eine Mittelspannungsebene zwischen 1 KV und 33 KV, eine Hochspannungsebene ab 33 KV bis 220 KV und eine Höchstspannungsebene größer als 220 KV, von welchen üblicherweise zwei Versorgungsebenen zusammenhängen.

In der Praxis der öffentlichen Stromversorgung im Energieversorgungsnetz werden je nach Versorgungsebene von den Energieversorgern und Netzbetreibern mehr oder weniger enge Grenzen für die Strom- und Spannungsqualität in Bezug auf den Blindleistungsanteil (Blindleistungsbezug oder Blindleistungslieferung) der Stromlieferanten und der Stromverbraucher, repräsentiert durch den cos phi Wert im Zeigerdiagramm von Strom und Spannung, gesetzt. Vielfach, insbesondere auch in Deutschland, beträgt der zulässige Wert von cos phi für einen sanktionslosen Blindleistungsbezug oder eine Blindleistungseinspeisung 0,95. Diese Maßnahme oder Grenzsetzung dient der Stabilisierung der Netze, um eine Überspannung, die zu einer Zerstörung von angeschlossenen Verbrauchern führen kann, und eine Unterspannung zu vermeiden, die zu einem Versagen von Verbrauchern führen kann. Als Regulativ zur Einhaltung der gesetzten cos phi Werte dient der Preis. So wird eine Einspeisung oder ein Bezug von Blindleistung außerhalb der von dem Energieversorger oder Obernetzbetreiber vorgegebenen Bandbreite für den cos phi mit erheblichen Aufzahlungen belegt.

Anlagen zur Erzeugung regenerativer Energie sind vielfältig bekannt. Jede Photovoltaikanlage (PV-Anlage) erzeugt einen Gleichstrom, der mittels eines Wechselrichters in einen Wechselstrom umgewandelt und bei geeigneten Bedingungen in ein Energieversorgungsnetz eingespeist wird. Als Wechselrichter können sowohl rein elektronische Geräte als auch elektromechanische Umformer eingesetzt werden. Unter Wechselrichter sind dabei alle Vorrichtungen zu verstehen, welche aus einer Gleichspannung eine Wechselspannung erzeugen können. So erzeugen Windkraftanlagen zwar unmittelbar einen Wechselstrom. Dieser ist jedoch über einen Frequenzumformer an die Verhältnisse des öffentlichen Energieversorgungsnetzes anzupassen. Diese Frequenzumformer umfassen ebenfalls Wechselrichter und sollen als Mittel mit umfasst sein.

Die elektronischen Komponenten eines Wechselrichter, ebenso wie auch die Kombination einer Gleichstrommaschine mit einem Synchrongenerator als mechanischen Wechselrichter, erlauben die Einstellung eines gewünschten cos phi Wertes in Bezug zur Leistung. Dies geschieht bei den meisten PV-Anlagen durch einen cos phi - Zeiger, über den ein festes Verhältnis von eingespeister Leistung zu eingespeister oder bezogener Blindleistung eingestellt werden kann. So wird der Regeleinheit z. B. vorgeschrieben, jegliche in das Netz eingespeiste Leistung mit einem cos phi von 0,97 einzustellen.

Aus der DE 199 61 705 A1 ist beispielsweise ein Wechselrichter für eine Photovoltaikanlage bekannt, mittels dessen eine Solaranlage an ein Energieversorgungsnetz angeschlossen werden kann und der eine Regelungseinheit zur dynamischen Berechnung eines Kompensationsstromes zur Kompensation von Oberschwingungen und Blindleistung im Netz aufweist. Durch den Betrieb des Wechselrichters mit der Regelungseinheit soll die Netzspannungsqualität in dem Energieversorgungsnetz verbessert werden. Die Regelungseinheit berechnet einen Kompensationsstrom-Sollwert aufgrund eines gemessenen Netzspannungswertes. Dabei wird das Messglied der Netzspannungsmessung an demjenigen Verknüpfungspunkt angeordnet, an dem der Wechselrichter die Energie in das Netz einspeist.

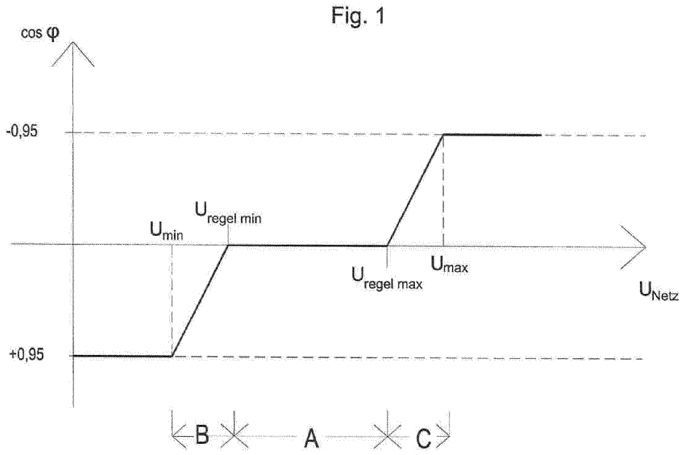

Bei größeren und modernen Anlagen wird der cos phi Wert nicht notwendig fest vorgegeben, sondern kann im Betrieb nach einem Diagramm entsprechend der Fig. 1 je nach den augenblicklichen Erfordernissen dynamisch eingestellt werden. Dort ist ein einzustellender cos phi-Wert am Ausgang des Wechselrichters über die Netzspannung aufgetragen. Die Ausgangsspannung (U_{Netz}) zur Einspeisung in das Netz darf nur innerhalb eines Bereiches zwischen einem minimalen Wert (Uₘᵢₙ) und einem maximalen Wert (Uₘₐₓ) variieren. Außerhalb dieses vom Energieversorger zugelassenen Bereichs der Einspeisung ins Netz mit einem cos phi von z. B. maximal 0,95 sollte die PV-Anlage nicht betrieben werden. Innerhalb dieses zulässigen Bereichs liegt ein engerer Bereich zwischen einer minimalen Regelspannung (U_{regel min}) und einer maximalen Regelspannung (U_{regel max}), in welchem reine Leistung ohne eine Blindleistungskomponente an das Netz abgegeben werden kann. In der Mitte dieses engeren Bereichs liegt die Sollspannung (Uₛₒₗₗ).

In der Regel sind Energieversorger, insbesondere in deren Vertragsverhältnis zum Obernetzbetreiber (e. g. Atomkraftwerk, Kohlekraftwerk etc.) als Energielieferant, vertraglich dazu verpflichtet, einen Blindleistungsbezugswert von cos phi 0,95 nicht zu überschreiten, um die Spannungsstabilität in dem überregionalen Obernetz sicher zu stellen. Dies bedeutet, dass in dem Beispiel ein cos phi Wert von 0,94 eine Überschreitung des Bezugs darstellt, wohingegen eine cos phi Wert von 0,96 ein Unterschreitung, also ein nicht Ausnutzen des maximal erlaubten Bezugs darstellt. Ein Bezug oder die Lieferung von Blindleistung ist aber häufig in den unteren Netzen erforderlich, um einen Spannungsanstieg durch die Einspeisung von Solar- und Windkraftstrom zu kompensieren bzw. um einen Spannungsabfall durch ausfallende Lieferung von alternativ erzeugter Energie oder das Anfahren von Maschinen zu kompensieren.

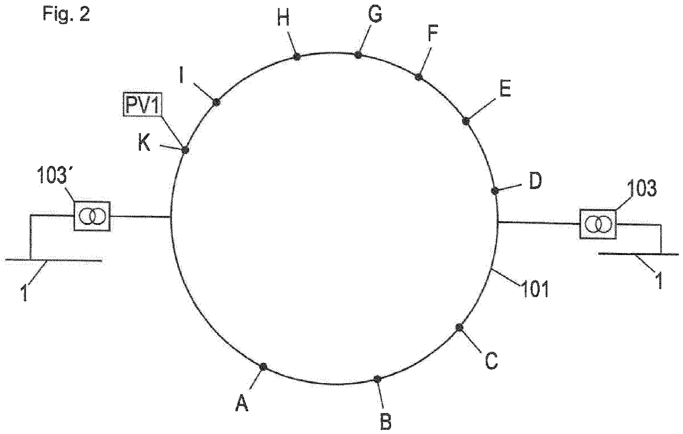

Zur näheren Erläuterung der Problematik und der sich daraus ergebenden Aufgabe wird ein Beispiel anhand der Fig. 2 beschrieben. In einem Mittelspannungsversorgungsnetz von 20kV werden mehrere Ortschaften A bis K unterschiedliche Größe über eine Ringleitung 101, die an zwei einspeisende Transformatoren 103 und 103' angeschlossen ist, mit Energie auf einer 0,4kV-Ebene versorgt. Die Ortschaften A bis K werden stabil mit Strom auf der 0,4kV-Ebene versorgt. Maßnahmen sind erforderlich, wenn einer der Transformatoren, z. B. der Transformator 103' wegen Wartungsarbeiten oder Defekt ausfällt und vom Netz zu nehmen ist. Der verbleibende Transformator 103 muss nun alle Ortsschaften A bis K mit Energie versorgen.

Um auch bei den entfernt liegenden Ortschaften E und D eine ausreichende Spannung bereitstellen zu können, muss durch die für das Versorgungsnetz zuständige Leitwarte die Ausgangsspannung am Transformator 103 erhöht werden. Das bedeutet für die nahe liegenden Ortschaften A und K, dass diese am oberen Rand der gewünschten Spannungsbandbreite versorgt werden. Für die entfernten Ortschaften bedeutet dies, dass diese eher am unteren Rand der Spannungsbandbreite versorgt werden. Befindet sich in der Ortschaft K eine größere PV-Anlage, so wird - entsprechend der zuvor beschriebenen Fig. 1 - deren Regeleinrichtung bestrebt sein, die PV-Anlage zurück in den Bereich B zu führen, da die Anlage aufgrund der erhöhten Netzspannung im Bereich der rechten Flanke, also im Bereich C betrieben wird. Da die PV-Anlagenregelung den ausgefallenen Transformator 103' nicht erkennt, wird im Ergebnis die Anlagenregelung auf ein Absenken der Netzspannung und die Leitwarte z. B. durch entsprechende Schaltvorgänge an Transformatoren auf ein Anheben der Netzspannung hinwirken, insbesondere durch eine Änderung des Übersetzungsverhältnisses. Diese gegengesetzt wirkenden Eingriffe in das Stromversorgungsnetz führten bereits dann regelmäßig zu instabileren Netzen, als noch keine regenerativen Energieerzeuger im derzeitigen Ausmaß vorhanden waren.

Ausgehend von den vorhergehenden Überlegungen liegt der Erfindung die Aufgabe zugrunde, ein Verfahren und eine Vorrichtung zur Stabilisierung des elektrischen Netzes eines öffentlichen Energieversorgers und insbesondere zur Einhaltung einer bestehenden Netzstabilität anzugeben.

Hinsichtlich des Verfahrens wird die Aufgabe durch die Merkmale des Anspruchs 1 und bezüglich der Vorrichtung durch die Merkmale des Anspruchs 8 erfindungsgemäß gelöst. Die Aufgabe wird dadurch gelöst, dass an dem ersten Netzverknüpfungspunkt zu dem mindestens einen Energieerzeugers und an dem zweiten Netzverknüpfungspunkt zur nachfolgend auch als Obernetz bezeichneten zweiten Spannungsebene, an die ein vorzugsweise in seinem Übersetzungsverhältnis veränderlicher Transformator angeschlossen ist, sowie an zumindest einem der weiteren Netzverknüpfungspunkte für die Verbraucher die aktuell herrschende Spannung gemessen wird. Zudem wird die geographische Lage der der Spannungsmessung unterzogenen Netzverknüpfungspunkte zusammen mit deren jeweils zugeordnetem Spannungsmesswert ermittelt. Eine Berechnung eines Blindleistungsbezugs oder einer Blindleistungslieferung des Energieerzeugers erfolgt in Abhängigkeit der Spannungsmesswerte unter Berücksichtigung deren geographischer Lage, also anhand einer Datenverknüpfung der Spannungsmesswerte und der geographischen Lage bzw. Position der jeweiligen Spannungsmessstelle. Hierdurch ist besonders vorteilhaft ein geographisch beeinflusstes Blindleistungsmanagement bereitgestellt. Das Verfahren ist für eine Anwendung auf mehreren Spannungsebenen des Energieversorgungsnetzes besonders geeignet.

Die Erfindung geht dabei von der Überlegung aus, dass eine vergleichsweise ungenaue Kenntnis von tatsächlichen Leitungslängen und damit eine vergleichsweise ungenaue Lagebestimmung der jeweiligen Spannungsmessstellen beim Blindleistungsmanagement nicht nur akzeptabel, sondern darüber hinaus durch den Vorteil aufgewogen sind, dass bei der Erstellung und Auswertung der Verhältnisse im Energieversorgungs- oder Stromnetz die exakten Leitungslängen gerade nicht bekannt sein müssen. Werden im Zuge eines Blindleistungsmanagements anstelle der exakten Leitungslängen die vergleichsweise ungenauen geographischen Lagedaten der Messorte oder -stellen herangezogen, die erkanntermaßen für eine effektives Blindleistungsmanagement ausreichend sind, ist die Kenntnis der Leitungslängen und Leitungsquerschnitt entbehrlich. Zudem ist es nicht erforderlich, bei einer Erweiterung oder einem Umbau des Energieversorgungsnetzes eine aufwendige Erhebung neuer Daten bezüglich geänderter Leitungslängen oder -querschnitte durchzuführen und diese Daten einem Rechenmodell oder dergleichen hinzuzufügen.

Unter Netzverknüpfungspunkt wird die Position der Zählstelle zwischen dem Verbraucher und dem Netz sowie zwischen dem Einspeiser und dem Netz verstanden. Vorliegenden wird unter Netzverknüpfungspunkt auch jede Position innerhalb des öffentlichen Energieversorgungsnetzes sowie des Netzes der Verbraucher und Einspeiser verstanden, an denen die Spannungsmessung vorgenommen wird.

Die Berechnung des Blindleistungsbezugs oder der Blindleistungslieferung des nachfolgend auch als Energielieferant bezeichneten Energieerzeugers erfolgt dabei derart in Abhängigkeit der Spannungsmesswerte, dass bei einer zu hohen gemessenen Spannung Blindleistung dem Netz entnommen wird, und dass bei einer zu niedrigen gemessenen Spannung Blindleistung in das Netz eingespeist wird. Die Anwendung des vorliegenden Verfahrens ist besonders geeignet, wenn es sich um einen regenerativen Energieerzeuger mit einem Wechselrichter handelt, und wenn mehrere solcher Energieerzeuger oder Energielieferanten über entsprechend zugeordnete erste Netzverknüpfungspunkte an das Versorgungsnetz angeschlossen sind.

Regenerativen Energieerzeugeranlagen sind üblicherweise mit elektronischen oder einem elektromechanischen Wechselrichter ausgerüstet, der gemäß den obigen Ausführungen Bestandteil von PV-Anlagen und Windanlagen ist. Diese Anlagen oder Geräte verfügen aufgrund deren inhärent vorhandenen Bauteile, wie z. B. IGBT's bei den elektronischen Wechselrichtern beziehungsweise einer Erregerstromsteuereinrichtung bei einem Maschinensatz, über die Möglichkeit, einen KVAr-Beitrag leisten. Es wird also eine ohnehin vorhandene Fähigkeit dieser Anlagen bzw. Geräte zu einem weiteren Zweck genutzt, nämlich der Stabilisierung des Energieversorgungsnetzes. Dies geschieht in der Regel ohne Einbußen bei der Lieferung der Wirkleistung. Ein Wechselrichter von z. B. 1 MW (MVA) Nennleistung, der aufgrund der aktuellen Sonneneinstrahlung lediglich mit 0,6 MVA belastet ist, hat eine freie Kapazität zur Lieferung oder zum Bezug von 0,4 MVAr Blindleistung.

Im Fall des Eingangs beschriebenen Beispiels kann dieser Wechselrichter - anstelle des Versuches der Einhaltung seines Regelbereichs durch eine Spannungssenkung - unter Aussetzung seines üblichen Regelschemas nach der Fig. 1 mit einem kapazitiven cos phi entsprechend einer Blindleistungseinspeisung betrieben werden, um einen Beitrag zur Spannungsanhebung zu leisten.

Besonders vorteilhaft ist es, wenn die geographische Entfernung von einem peripher liegenden Verbraucher zu einem, insbesondere dem nächstliegenden Spannungsmessverknüpfungspunkt ermittelt wird und in die Berechnung der Höhe des Blindleistungsbezugs oder der Blindleistungslieferung eingeht. Die geographische Zuordnung ist bei einem bestehenden Energieversorgungsnetz zu einem betrachteten Zeitpunkt fest. Wenn der sich also der periphere Verbraucher (z. B. ein Bauernhof) in einer Entfernung von z. B. drei Kilometern (3 km) zum nächstliegenden Spannungsmesspunkt befindet, so ist der Spannungsabfall entlang dieser Strecke bekannt und unverändert, solange keine Erweiterung des Energieversorgungsnetzes erfolgt. Dieser Spannungsabfall entlang der Strecke geht dann in die Berechnung des erforderlichen Blindleistungsbezugs oder der Blindleistungslieferung ein, der bzw. die für die Erzielung einer stabilen Spannung des Verbrauchers (Bauernhof) erforderlich ist.

Bei Vorliegen mehrerer Energieerzeuger bzw. -lieferanten wird derjenige Energielieferant mit der kürzesten Entfernung zu dem peripheren Verbraucher zum Blindleistungsbezug oder zur Blindleistungslieferung herangezogen. Dadurch wird erreicht, dass sich die Blindleistungslieferung nicht über weit entfernt liegende Netzteile hinweg erstreckt, so dass dort die Auswirkungen auf andere Netzverknüpfungspunkte gering sind.

Zur Erleichterung der Arbeit in einer Leitwarte des Versorgungsnetzes ist es zweckmäßig, die Spannungsmesswerte einer Rechen- und Steuereinheit zuzuführen, die dazu vorgesehen und geeignet ist, anhand der Spannungsmesswerte ein geographisches Spannungsbild zu erstellen, welches repräsentativ für die Höhe der Spannung im Energieversorgungsnetz ist. Die Rechen- und Steuereinheit regelt die Leistungs- und Blindleistungseinspeisung oder den Leistungs- bzw. Blindleistungsbezug in das Energieversorgungsnetz mittels Eingriff in den Wechselrichter des mindestens einen Energieerzeugers. Ziel des Regelalgorithmus ist es, dass die im Versorgungsnetz herrschende Spannung an keinem Netzverknüpfungspunkt einen vorgebbaren Wert übersteigt oder unterschreitet.

Die Spannungsverhältnisse im Versorgungsnetz können als geographisches Spannungsbild farblich auf einem Bildschirm dargestellt werden. Ein bestimmte Farbgebung, z. B. die Farbe rot, kann dabei Bereiche kennzeichnen, deren Spannung sich eher am oberen Grenzwert befindet, während eine andere Farbgebung, z. B. blau, geographische Bereich kennzeichnen kann, deren Spannung sich am unteren Grenzwert eingestellt hat. Dabei handelt es sich geeigneterweise um Bereiche, in denen ein Eingriff in das Blindleistungsmanagement des regenerativen Energieerzeugers und/oder gegebenenfalls in das Übersetzungsverhältnis des Transformators notwendig sein könnte. Mit einer weiteren Farbgebung, z. B. grün, können dann Bereiche gekennzeichnet sein, die momentan nicht die Aufmerksamkeit des Bedienpersonals der Leitwarte erfordern.

Sollte der vorhandene Transformator in seinem Übersetzungsverhältnis nicht automatisch oder per Fernsteuerung regelbar sein, so ist es zweckmäßig, dass die Rechen- und Regeleinheit eine Empfehlung zur Einstellung eines entsprechenden Übersetzungsverhältnisses an den Netzbetreiber abgibt. Dieser kann daraufhin einen Monteur zu dem Transformator entsenden, der über mechanische Mittel das Übersetzungsverhältnis vor Ort anpasst.

Zur Vermeidung der eingangs erwähnten Aufzahlungen oder Zuschläge bei Verletzung der Blindleistungsvorgaben des Obernetzbetreibers ist es zweckmäßig, wenn die Rechen- und Steuereinheit den Energiefluss dahingehend steuert, dass ein Blindleistungsübergang am zweiten Verknüpfungspunkt einen vorgebbaren Grenzwert nicht übersteigt.

Es ist vorteilhaft, wenn die Betriebsführung des Wechselrichters durch die ihm inhärente Regeleinrichtung auf den maximalen Leistungspunkt MPP (**M**aximum **P**ower **P**oint) der PV-Anlage oder der Windkraftanlage beibehalten wird. Zudem ist es vorteilhaft, wenn der Wechselrichter zusätzlich eine solche Blindleistungsmenge in die Versorgungsebene einspeist oder aus ihr bezieht, die maximal der Differenz der aktuell gelieferten Leistung zur Nennleistung des Wechselrichters entspricht. Dadurch wird der Blindleistungsbetrag auf die zur Erreichung der Nennleistung des Wechselrichters verbleibende Leistung beschränkt. Zudem wird die vom Energieerzeuger selber generierte Energie nicht eingeschränkt oder reduziert. Die freie Leistungskapazität des Wechselrichters wird lediglich zur Erfüllung einer weiterer Funktion, nämlich derjenigen des Phasenschiebers oder Blindleistungslieferanten herangezogen.

Es kann auch vorgesehen sein, dass die Betriebsführung des Wechselrichters vorsieht, unter Umgehung der ohnehin erforderlichen Aussetzung der ihm inhärenten Regeleinrichtung hin zu dem maximalen Leistungspunkt MPP einen vorgebbaren Blindleistungsanteil in die Versorgungsebene einzuspeisen oder aus ihr zu beziehen. Dieses ist sinnvoll, wenn es aufgrund der aktuellen Netzverhältnisse für den Anlagenbetreiber wertvoller ist, Blindleistung zur Netzstabilisierung zu liefern, als Wirkleistung für den Antrieb von Maschinen, dem Betrieb von Klimaanlagen oderdergleichen bereitzustellen.

Innerhalb der Betriebsführung des Wechselrichters führt eine gemessene Unterspannung unterhalb eines Schwellwerts zu einer Einspeisung von Blindleistung seitens des Wechselrichters, während eine drohende Überspannung, z. B. bei Erreichen eines oberen Schwellwerts, zu einem Bezug von Blindleistung durch den mindestens einen Wechselrichter führt.

Eine gemäß der Erfindung auch großflächige Überwachung des Spannungszustands auf dem Leitungsnetz der Versorgungsebene sieht vor, dass die Spannung an den Netzverknüpfungspunkten von mehreren Verbrauchern auf derselben Versorgungsebene ermittelt wird, und dass die Betriebsführung anhand dieser mehreren Spannungswerte erfolgt. Dadurch kann bei Kenntnis einer Vielzahl von gemessenen Spannungen und insbesondere bei Vorliegen mehrerer regenerativer Energieerzeuger an geographisch weiter auseinanderliegenden Verknüpfungspunkten eine optimale Betriebsführung des Leitungsnetzzustands erreicht werden.

Bei Vorliegen von mehreren Energieerzeugern oder -lieferanten regenerativer Energie mit jeweils zugeordnetem Netzverknüpfungspunkt in dasselbe Versorgungsnetz ist es sinnvoll, dass der zu liefernde Blindleistungsanteil derart auf die entsprechend mehreren Wechselrichter aufgeteilt wird, dass die beteiligten Wechselrichter in Summe möglichst verlustarm arbeiten. Unter verlustarm wird verstanden, dass aus dem regenerativen Energieangebot, z. B. Sonne oder Wind, eine möglichst große Menge an Kilowattstunden in das Netz eingespeist werden kann. Dies ermöglicht eine effiziente Ausnutzung der verfügbaren Blindleistungskapazitäten. Aus demselben Grund ist es angebracht, dass derjenige Energieerzeuger bevorzugt zur Blindleistungseinspeisung oder zum Blindleistungsbezug herangezogen wird, der demjenigen Netzverknüpfungspunkt räumlich benachbart ist, an dem der Spannungswert ermittelt wird und der sich einem kritischen Wert nähert.

Zum Schutz des Wechselrichters und der Photovoltaikanlage vor Überspannungsschäden sieht das Blindleistungsmanagement den Einsatz eines Begrenzers vor, der den vorgegebenen Blindleistungsbetrag dahingehend reduziert anwendet, dass eine maximal zulässige Spannung am Ausgang des Wechselrichters nicht überschritten wird. Ebenso ist es sinnvoll, die Regel- und/oder Steuervorrichtung zu ertüchtigen, den vorgegebenen Blindleistungsbetrag dahingehend angehoben anzuwenden, dass eine minimal zulässige Spannung am Eingang des Wechselrichters nicht unterschritten wird. Die Wechselrichter können eine Blindleistungslieferung oder einen Blindleistungsbezug unabhängig von der momentan vorliegenden Leistung P erfüllen. Insbesondere bei Wechselrichtern mit Photovoltaikmodulen bedeutet dies, dass die Wechselrichter konstant am Netz bleiben und auch nachts zur Regelung bereitstehen.

Als Energieerzeuger bzw. -lieferant kommt auch ein Energiespeicher in Form Batteriebank, eines Pumpspeicherkraftwerk oder dergleichen infrage. Dieser kann dann Leistung oder auch Blindleistung auf Anforderung aus der betreffenden Spannungsebene beziehen oder in die Spannungsebene einspeisen.

Es ist vorteilhaft, wenn der Netzbetreiber z. B. für bekannte bzw. anstehende Wartungsarbeiten für den entsprechenden Netzbereich einen Sollspannungsbereich definiert, den die Rechen- oder Regel- bzw. Steuereinheit unter Inanspruchnahme ihres Regelalgorithmus einhält.

Nachfolgend wird ein Ausführungsbeispiel der Erfindung anhand einer Zeichnung näher erläutert. Darin zeigen:
- Fig. 1: ein Regelschema eines Wechselrichters einer Solaranlage zur Einstellung eines cos phi Werts über die Ausgangsspannung,
- Fig. 2: schematisch eine Ringleitung mit Versorgungstransformatoren und Netzverknüpfungspunkten zur Beschreibung des Auftretens von Netzinstabilitäten, und
- Fig. 3: eine schematische Darstellung eines erfindungsgemäß betriebenen Energieversorgungsnetzes.

In Fig. 1 ist ein Regelschema des cos phi über die Wechselrichterausgangsspannung U dargestellt, das prinzipiell bei moderneren PV-Anlagen vorteilhaft zur Anwendung kommt und das das Verständnis der sich anschließenden Beschreibung erleichtern soll.

Es sind zwei Grenzwerte Uₘᵢₙ und Uₘₐₓ vorgesehen, die generell nicht unter- bzw. überschritten werden sollen. Zwischen diesen Randgrenzwerten Uₘᵢₙ und Uₘₐₓ liegt ein linearer Regelbereich A, der von zwei Regelgrenzwerten U_{regel min} und U_{regel max} eingegrenzt ist. In diesem Bereich A wird die Anlage cos phi neutral gefahren und es wird reine Wirkleistung in das Versorgungsnetz eingespeist. Liegt der Betriebspunkt des Wechselrichters mit seiner Ausgangsspannung U im Bereich B zwischen Uₘᵢₙ und U_{regel min}, so wird zusätzlich Blindleistung VAr (Ampere reactive) in das Versorgungsnetz geliefert.

Analog wird bei einem Betriebspunkt des Wechselrichters mit einer Ausgangsspannung U im Bereich C zwischen Uₘₐₓ und U_{regel max} zusätzlich zur Leistungseinspeisung Blindleistung VAr dem Versorgungsnetz entnommen. Der Betriebspunkt ist dabei über Halbleiterelemente oder -schalter, insbesondere IGBT's (Insulated-Gate Bipolar Transistor), im Wechselrichter, insbesondere mittels eines sogenannten MPP-Reglers (**M**aximum **P**ower **P**oint), einstellbar. An den beiden oberen und unteren Grenzwerten gibt es noch Notfallflanken, auf die hier nicht weiter eingegangen werden soll.

Je nach Betriebspunkt ergibt sich also unter Umständen ein Blindleistungsbezug aus dem Netz, was generell eine Tendenz zur Spannungssenkung der Netzspannung bedeutet, oder auch eine Blindleistungseinspeisung, was gleichbedeutend ist mit einer Spannungsanhebung auf der Versorgungsebene, an die der Wechselrichter angeschlossen ist.

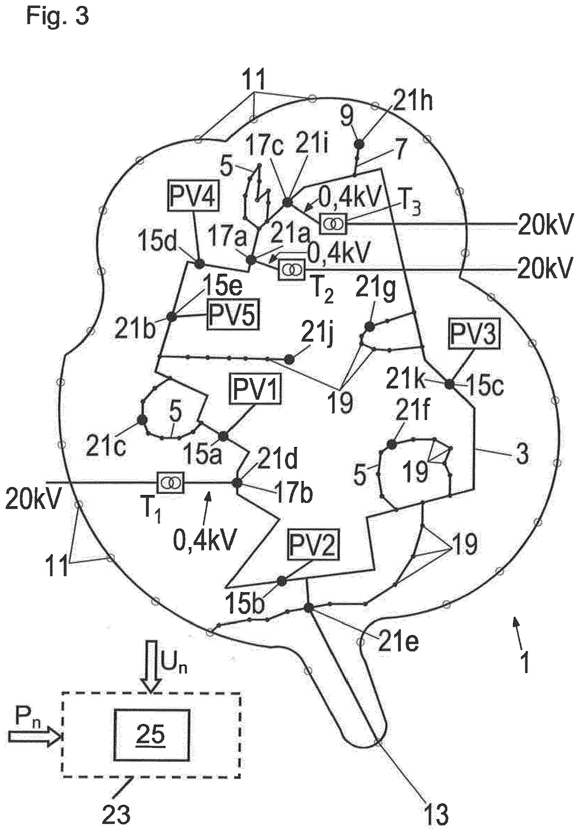

In der Figur 3 ein nachfolgend als Versorgungsnetz bezeichnetes öffentliches Energieversorgungsnetz 1 beispielsweise einer kleineren Stadt schematisch veranschaulicht. Die 0,4KV-Ebene des Versorgungsnetz 1 wird mittels drei Transformatoren T1, T2 und T3 aus einer 20KV-Ebene gespeist. Dazu ist eine innerhalb des Stadtgebietes verlegte Hauptringleitung 3 vorgesehen, an welche die drei Transformatoren T1, T2 und T3 angeschlossen sind. An die Hauptringleitung 3 sind weitere Ringleitungen angeschlossen, von denen nur drei Ringleitungen 5 exemplarisch gezeigt sind. Die Ringleitungen 5 führen zu Siedlungen, Geschäftsvierteln, Handwerksbetriebe usw. Von der Hauptringleitung 3 zweigt eine Stichleitung 7 zu einem Industriekomplex oder einer größeren Fabrik 9 ab, die direkt von der Hauptstichleitung 5 mit elektrischer Energie versorgt wird.

Die Peripherie des Versorgungsnetzes 1 ist mit Kreisringen 11 gekennzeichnet, die Verbrauchsstellen darstellen. Die Verbindungslinien zwischen den Kreisringen 11 stellen keine Versorgungsleitungen dar, sondern sollen lediglich den äußeren Umfang des Versorgungsgebiets illustrieren. Am unteren Rand der Figur 1 ist eine abseits gelegene Verbrauchsstelle, beispielsweise ein landwirtschaftlicher Betrieb 13 an das Versorgungsnetz 1 angeschlossen.

An die Hauptringleitung 3 sind fünf alternative Energieversorger oder -erzeuger in Form von Photovoltaikanlagen PV1 bis PV5 über jeweils einen ersten Netzverknüpfungspunkt 15a bis 15e angeschlossen. Die drei Transformatoren T1 bis T3 speisen jeweils über zweite Netzverknüpfungspunkte 17a, 17b, 17c in die Hauptringleitung 3 ein. Ferner sind eine Vielzahl von dritten Netzverknüpfungspunkten 19 vorgesehen, an welche jeweils eine Verbrauchsstelle 11, 13 angeschlossen ist, die beispielsweise auch ein Gebäude, eine Wirtschaft, ein Ladenlokal oder dergleichen sein kann. Alle Netzverknüpfungspunkte 15, 17 und 19 sind durch einen kleinen Vollpunkt gekennzeichnet.

Ein großer Vollpunkt symbolisiert anstelle eines kleinen Vollpunktes, dass der betroffene Netzverknüpfungspunkt 15a bis 15e, 17a bis 17c und 19 nicht nur dessen normale Funktion wahrnimmt, sondern dass zusätzlich an seinem Anschluss die momentan herrschende Spannung gemessen wird, so dass diese Netzverknüpfungspunkte gleichzeitig als Messstellen 21 dienen. Diese Messstellen 21 sind zur Erleichterung des Verständnisses der Beschreibung zur Funktionsweise des Verfahrens zusätzlich mit 21a bis 21k durchnummeriert. Ein geeigneter Abgriff als Mittel zur Messung der Spannung ist dabei der übliche Zähler (Zählergerät oder Zählerkasten) des Verbrauchers. Die Messstellen 21a bis 21k sind strategisch über dem Versorgungsnetz 1 verteilt, worauf später noch eingegangen wird.

Zumindest bei einigen der Messstellen 21a bis 21i werden deren geographische Lage Pₙ, insbesondere deren GPS-Daten (Global Positioning System), einer Vorrichtung 23 mit einer Regel- und Steuereinrichtung bzw. -einheit 25 zur Netzstabilisierung, beispielsweise einer Leitwarte, zugeführt und dort abgespeichert sowie mittels der Regel- und Steuereinrichtung bzw. -einheit 25 verarbeitet. Somit liegt in der Vorrichtung 23 bzw. der Leitwarte jeweils ein Datenpaar Uₙ, Pₙ bestehend aus der gemessenen Spannung in Form eines entsprechenden Spannungsmesswertes Uₙ und dem Ort bzw. der geographischen Lage Pₙ vor, an dem die Messung erfolgt ist. Zweckmäßigerweise wird in dieser Art und Weise bei allen Messstellen 21a bis 21k verfahren. Der Index n repräsentiert dabei die jeweilige Messstellen 21a bis 21i, die ihrerseits die jeweiligen Netzverknüpfungspunkte 15a bis 15e, 17a bis 17c und 19 repräsentieren, an denen die Spannungen gemessen werden. Die Regel- und Steuereinrichtung bzw. -einheit 25 ist dazu vorgesehen und eingerichtet, die von den Mitteln erfassten Spannungsmesswerte Uₙ mit der geographischen Lage Pₙ der entsprechenden Netzverknüpfungspunkte 15, 17, 19 zu verknüpfen und anhand der Verknüpfungen ein Blindleistungsbezug oder eine Blindleistungslieferung des Energieerzeugers PV zu berechnen.

Die geographisch geeignetste Lage ist nicht durch eine feste Regel bestimmt, sondern ergibt sich aus der momentanen elektrischen Situation des Netzes. Ist zum Beispiel ein Großabnehmer, wie z. B. die Fabrik 9 nicht am Netz, oder werden an einem der Transformatoren T1 bis T3 beispielsweise Wartungsarbeiten durchgeführt, so liegen andere elektrische Verhältnisse vor, als mit diesen Netzteilnehmern. Unter dem geographischen Gesichtspunkt geeignet bedeutet, jeweils dort die Maßnahme durchzuführen, wo sich der geringste Einfluss auf weiter entfernt liegende Verbraucher oder Einspeiser einstellt. Eine gezielte Änderung des Übersetzungsverhältnisses und eine gezielte Einspeisung oder Bezug von Blindleistung, sollte stets in der "elektrischen" Nähe erfolgen, um den gewünschten Effekt von z. B. einer Spannungsanhebung nicht über größere Entfernung im Versorgungsnetz 1 durch schleifen zu müssen.

Zur Funktionsweise des Verfahrens sollen nachfolgend einige beispielhaft vorkommende Situationen behandelt werden:
1. Gemäß einer ersten beispielhaften Situation habe die Fabrik 9 in den Vormittagsstunden einen besonders hohen Energiebedarf, weil Öfen aufzuheizen oder Maschinen oder Montagebänder in Betrieb zu nehmen sind. An der Messstelle 21h wird registriert, dass sich die Spannung auf den unteren Grenzwert zu bewegt und Gegenmaßnahmen zu treffen sind. Das geographisch am nächsten liegende Mittel zur Spannungserhöhung ist der Transformator T3. Dessen Übersetzungsverhältnis wird derart verändert, dass die Spannung an seinem Netzverknüpfungspunkt 17c erhöht wird, wodurch auch die Spannung in der Fabrik 9 erhöht wird. Diese Spannungserhöhung könnte aber zur Folge haben, dass die Spannung an einem anderen Netzverknüpfungspunkt 19, zum Beispiel derjenige, der gleichzeitig als Messstelle 21g oder 21f ausgelegt ist, derart erhöht wird, dass sich dort die Spannung dem oberen Grenzwert nähert.
   In der geographischen Nähe der Messstellen 21g und 21f befindet sich die PV-Anlage PV3, die dann von der Leitwarte beeinflusst wird, Blindleistung aus dem Netz zu beziehen und somit für eine Spannungsabsenkung an den zu den Messstellen 21g und 21f gehörigen weiteren Netzverknüpfungspunkten 19 zu sorgen.
2. Gemäß einer zweiten beispielhaften Situation zeichne sich am dritten oder weiteren Netzverknüpfungspunkt 19 mit der Messstelle 21c ab, dass die Spannung sich dem oberen Grenzwert nähert, weil die nahe gelegene PV-Anlage PV1 zur Mittagszeit bei wolkenlosem Himmel einen hohen Energiebeitrag in die Hauptringleitung 3 einspeist.
   In der Leitwarte kann der Wechselrichter, der ebenfalls nahe gelegenen PV-Anlage PV5 derart in dessen Betrieb modifiziert werden, dass dieser zusätzlich zur Leistungseinspeisung auch Blindleistung aus dem Versorgungsnetz 1 bezieht und somit spannungsreduzierend an der Messstelle 21c wirkt.
3. Gemäß einer dritten beispielhaften Situation reduziere sich die Spannung am Netzverknüpfungspunkt 19 mit der Messstelle 21e. Aufgrund der Kenntnis der Leitungslänge zum beispielsweise mehrere Kilometer entfernten Bauernhof 13 und dem mit der Länge einhergehenden Spannungsabfall liegt der Leitwarte die Information vor, dass sich am Ort des Bauernhofes 13 die Spannung dem unteren Grenzwert nähert, obwohl die Spannung an der Messstelle 21e noch akzeptabel ist.
   Als Reaktion auf diese Situation kann bei der geographisch günstig liegenden Photovoltaikanlage PV2 darauf hingewirkt werden, dass diese Blindleistung an das Versorgungsnetz 1 einspeist, um eine ausreichend hohe Spannung am Ort des Bauernhofs 13 zu gewährleisten.
4. Auch kann insbesondere am Ende einer Stichleitung, wie an der Messstelle 21j, die Spannung gemessen werden, um dann das geographisch am geeignetsten liegende Mittel auszuwählen, d. h. welcher regenerative Energieerzeuger Blindleistung beziehen oder einspeisen sollte, um dort die Spannung zu stabilisieren.

Aus Gründen der Übersichtlichkeit sind nur wenige Teilnehmer an dem Versorgungsnetz 1 dargestellt, die zudem nicht ausnahmslos als Messstelle 21 dienen. Je größer die Anzahl der im Energieversorgungsnetz 1 eingerichteten Messstellen 21 ist, desto exakter wird das Verfahren.

Gemäß einer geeigneten Darstellung kann das Energieversorgungsnetz 1 geographisch auf einem Bildschirm dazugestellt werden. Dabei sollten sich Bereiche mit einer drohenden Unterspannung, Bereich mit einer drohenden Überspannung und auch im Normalbereich befindliche Bereiche vorzugsweise farblich voneinander unterscheiden. Im Ergebnis sollte eine sich in bestimmten Zeitabständen, beispielsweise sekündlich, farblich ändernde Karte dargestellt, generiert und gezeigt werden, aus der die Gesamtsituation im Energieversorgungsnetz 1 laufend ersichtlich ist.

Mit einem geeigneten Lernprogramm, welches die durchgeführten Maßnahmen zur Spannungsstabilisierung und damit zur Netzstabilisierung auswertet und analysiert, kann der Prozess soweit automatisiert werden, dass sich eine selbsttätige Regelung der Stellgrößen, insbesondere des Übersetzungsverhältnisses des jeweiligen Transformators T1 bis T3 und des Blindleistungsmanagements, ergibt.

Aus dem zuvor beschriebenen Ausführungsbeispiel ist ersichtlich, dass die Erfindung auch so definiert werden kann, dass ein Verfahren zum Herstellen und/oder Einhalten der Netzstabilität in dem elektrischen Versorgungsnetz 1 angegeben ist, an welches über den ersten Netzverknüpfungspunkt 15 der Energielieferant, über den zweiten Netzverknüpfungspunkt 17 der, insbesondere in seinem Übersetzungsverhältnis veränderlicher Transformator T1-T3 zu einem Obernetz, z. B. das 20kV Netz, und über die Vielzahl weiterer Netzverknüpfungspunkte 19 jeweils zugeordnete Verbraucher 9,13 angeschlossen sind, und welches dadurch gekennzeichnet ist, dass an dem ersten, dem zweiten und an einem Teil der weiteren Netzverknüpfungspunkte die aktuell herrschende Spannung gemessen wird, und dass die geographische Lage der der Spannungsmessung unterzogenen Netzverknüpfungspunkte in Kombination mit deren zugeordnetem Spannungsmesswert verwendet wird, um die Berechnung des Blindleistungsbezugs oder der Blindleistungslieferung des Energielieferanten in Abhängigkeit der Spannungsmesswerte unter Berücksichtigung ihrer geographischen Lage vorzunehmen.

### Bezugszeichenliste

- 1: Energieversorgungsnetz
- 3: Hauptringleitung
- 5: Ringleitung
- 7: Stichleitung
- 9: Fabrik
- 11: Kreisring/Verbrauchsstelle
- 13: Bauernhof/ Verbrauchsstelle
- 15: erster Netzverknüpfungspunkt
- 17: zweiter Netzverknüpfungspunkt
- 19: dritter Netzverknüpfungspunkt
- 21: Messstelle
- 23: Vorrichtung
- 25: Regel- und Steuereinheit
- 101: Ringleitung
- 103,103': Transformator

- A bis K: Ortschaft
- Pₙ: geographische Lage
- PV: PV-Anlage/Energieerzeuger
- T1,T2,T3: Transformator
- Uₙ: Spannungsmesswert

## Patentansprüche

1. Verfahren zur Stabilisierung des Netzbetriebs eines elektrischen Energieversorgungsnetzes (1), an welches über einen ersten Netzverknüpfungspunkt (15) ein Energielieferant (PV) einer ersten Spannungsebene (0,4kV) und über zweite Netzverknüpfungspunkte (17a, 17b, 17c) in ihren jeweiligen Übersetzungsverhältnissen veränderliche Transformatoren (T1 bis T3) an eine zweite Spannungsebene (20kV) sowie über eine Anzahl dritter Netzverknüpfungspunkte (19) jeweils zugeordnete Verbraucher (9, 13) angeschlossen sind,
- bei dem an dem ersten Netzverknüpfungspunkt (15) und an den zweiten Netzverknüpfungspunkten (17a, 17b, 17c) sowie an zumindest einem der dritten Netzverknüpfungspunkte (19) die jeweils aktuelle Spannung als Spannungsmesswert (Uₙ) erfasst wird,
- bei dem anhand einer Verknüpfung der Spannungsmesswerte (Uₙ) mit der geographischen Lage (Pₙ) der entsprechenden Netzverknüpfungspunkte (15, 17, 19) ein Blindleistungsbezug oder eine Blindleistungslieferung des Energieerzeugers (PV) ermittelt wird, und
- bei dem im Zuge eines Blindleistungsmanagements die ermittelte Blindleistung in das Energieversorgungsnetz (1) eingespeist oder die ermittelte Blindleistung dem Energieversorgungsnetzes (1) entnommen wird, wobei vom geographisch geeignetesten Energielieferanten Blindleistung bezogen oder eingespeist wird, um am dortigen Netzverknüpfungspunkt (15, 17, 19) die Spannung zu stabilisieren.

2. Verfahren nach einem Anspruch 1, bei dem die geographische Entfernung eines peripheren Verbrauchers (9, 13) zu einem Netzverknüpfungspunkt (15, 17, 19), insbesondere zum als Spannungsmessstelle (15a bis 15e, 17a bis 17c, 19) wirksamen nächstgelegenen Netzverknüpfungspunkt (15, 17, 19), ermittelt und die ermittelte Entfernung zur Berechnung des Blindleistungsbezugs oder der Blindleistungslieferung herangezogen wird.

3. Verfahren nach Anspruch 2, bei dem bei mehreren Energieerzeugern (PV) der dem peripheren Verbraucher (9, 13) nächstgelegene Energieerzeuger (PV) zum Blindleistungsbezug bzw. zur Blindleistungslieferung herangezogen wird.

4. Verfahren nach einem der Ansprüche 1 bis 3, bei dem anhand der Spannungsmesswerte (Uₙ) ein die Höhe der Spannung im Energieversorgungsnetz (1) repräsentierendes geographisches Spannungsbild erstell wird, wobei die Blindleistungseinspeisung bzw. der Blindleistungsbezug in das Energieversorgungsnetz (1) derart geregelt wird, dass die Spannung im Energieversorgungsnetz (1) an keinem Netzverknüpfungspunkt (15, 17, 19) einen vorgegebenen oder vorgebbaren Wert übersteigt oder unterschreitet.

5. Verfahren nach Anspruch 4, bei dem Informationen über die freie Kapazität des oder jedes Energieerzeugers (PV) zur Blindleistungseinspeisung bzw. zum Blindleistungsbezug herangezogen werden.

6. Verfahren nach Anspruch 4 oder 5, bei dem das Übersetzungsverhältnis zwischen den Spannungsebenen (0,4kV, 20kV) verändert und/oder die Leistung des Energieerzeugers (PV) verändert wird, wenn die Regelung der Blindleistungseinspeisung bzw. des Blindleistungsbezug ausgeschöpft ist.

7. Verfahren einem der Ansprüche 4 bis 6, bei dem der Bezug und/oder die Lieferung von Blindleistung derart gesteuert wird, dass ein Blindleistungsübergang am zweiten Verknüpfungspunkt (17) einen vorgegebenen oder vorgebbaren Grenzwert nicht überschreitet.

8. Vorrichtung zur Netzstabilisierung eines elektrischen Energieversorgungsnetzes (1) mit einer ersten Spannungsebene (0,4kV) und mit einer zweiten Spannungsebene (20kV) sowie mit einem ersten Netzverknüpfungspunkt (15) an einen Energieerzeuger (PV) der ersten Spannungsebene (0,4kV) und mit in ihrem Übersetzungsverhältnis veränderliche Transformatoren (T1 bis T3) an die zweite Spannungsebene (20kV) angeschlossenen zweiten Netzverknüpfungspunkten (17a, 17b, 17c) sowie mit einer Anzahl dritter Netzverknüpfungspunkte (19) zu jeweils zugeordneten Verbrauchnern (9, 13),
- wobei Mittel zur Erfassung der jeweils aktuellen Spannung am ersten Netzverknüpfungspunkt (15) und an den zweiten Netzverknüpfungspunkten (17a, 17b, 17c) sowie an zumindest einem der dritten Netzverknüpfungspunkte (19) vorgesehen sind, und
- wobei eine Regel- und Steuereinheit (25) zur Durchführung des Verfahrens nach einem der Ansprüche 1 bis 7 vorgesehen und eingerichtet ist.

9. Vorrichtung nach Anspruch 8, wobei mehrere, insbesondere einen Wechselrichter oder einen Generator aufweisende, regenerative Energieerzeugern (PV) vorgesehen sind, die über entsprechend zugeordnete erste Netzverknüpfungspunkte (15) an das Energieversorgungsnetz (1) angeschlossen sind.

10. Vorrichtung nach Anspruch 8 oder 9, wobei mehrere Transformatoren (T1 bis T3) zur zweiten Spannungsebene (20kV) über jeweils zugeordnete zweite Netzverknüpfungspunkte (17) an das Energieversorgungsnetz (1) angeschlossen sind.

## Claims

1. Method for stabilising the network operation of an electrical power supply network (1), to which a power generator (PV) of a first voltage level (0.4kV) is connected via a first network connection point (15) and via second network connection points (17a, 17b, 17c) transformers (T1 to T3), the respective transformation ratios of which are variable, are connected to a second voltage level (20kV) and via a number of third network connection points (19) respectively assigned consumers (9, 13) are connected,
- in which at the first network connection point (15) and at the second network connection points (17a, 17b, 17c) as well as at at least one of the third network connection points (19) the respective current voltage is recorded as a measured voltage value (Uₙ),
- in which, on the basis of a linkage of the measured voltage values (Un) with the geographical location (Pₙ) of the corresponding network connection points (15, 17, 19), a reactive power reference or a reactive power supply of the power generator (PV) is detected, and
- in which, in the course of reactive power management, the detected reactive power is fed into the power supply network (1) or the detected reactive power is withdrawn from the power supply network (1), wherein reactive power being obtained or fed in from the geographically most suitable energy supplier in order to stabilize the voltage at the local network connection point (15, 17, 19).

2. Method according to Claim 1, in which the geographical distance of a peripheral consumer (9, 13) to a network connection point (15, 17, 19), in particular to the nearest network connection point (15, 17, 19) being designed as a voltage measuring point (15a to 15e, 17a to 17c, 19), is detected and the detected distance is used to calculate the reactive power reference or the reactive power supply.

3. Method according to Claim 2, in which in the case of several power generators (PV) the power generator (PV) closest to the peripheral consumer (9, 13) is used for reactive power supply or reactive power supply.

4. Method according to one of Claims 1 to 3, in which a geographical voltage diagram representing the level of voltage in the power supply network (1) is produced on the basis of the measured voltage values (Uₙ), wherein the reactive power feed or the reactive power reference into the power supply network (1) is regulated in such a way that the voltage in the power supply network (1) does not exceed or fall below a predetermined or predeterminable value at any network connection point (15, 17, 19).

5. Method according to Claim 4, in which information on the free capacity of the or each power generator (PV) is used for reactive power supply or reactive power reference.

6. Method according to Claim 4 or 5, in which the transformation ratio between the voltage levels (0.4kV, 20kV) is changed and/or the power of the power generator (PV) is changed when the control of the reactive power supply or reactive power reference is exhausted.

7. Method according to one of Claims 4 to 6, in which the reference and/or supply of reactive power is controlled in such a way that a reactive power transition at the second connection point (17) does not exceed a predetermined or predeterminable limit value.

8. Device for network stabilization of an electrical power supply network (1) with a first voltage level (0.4kV) and with a second voltage level (20kV) and with a first network connection point (15) to a power generator (PV) of the first voltage level (0,4kV) and with second network connection points (17a, 17b, 17c) connected to the second voltage level (20kV) and with transformers (T1 to T3) variable in their transformation ratio, and with a number of third network connection points (19) to respectively assigned consumers (9, 13),
- wherein means are provided for detecting the respective current voltage at the first network connection point (15) and at the second network connection points (17a, 17b, 17c) and at at least one of the third network connection points (19), and
- wherein a regulating and control unit (25) is provided and set up for carrying out the method according to one of Claims 1 to 7.

9. Device according to Claim 8, wherein a plurality of regenerative power generators (PV) are provided, in particular having an inverter or a generator, said generators being connected to the power supply network (1) via correspondingly assigned first network connection points (15).

10. Device according to Claim 8 or 9, wherein a plurality of transformers (T1 to T3) are connected to the second voltage level (20kV) via respectively assigned second network connection points (17) to the power supply network (1).

## Revendications

1. Procédé pour la stabilisation du fonctionnement d'un réseau d'alimentation d'énergie électrique (1), auquel un générateur d'énergie (PV) d'un premier niveau de tension (0,4 kV) est relié par l'intermédiaire d'un premier point de connexion réseau (15) et des transformateurs (T1 à T3), dont les rapports de transformation respectifs sont variables, sont reliés à un deuxième niveau de tension (20 kV) par l'intermédiaire de deuxièmes points de connexion réseau (17a, 17b, 17c), et auquel par un certain nombre de troisièmes points de connexion réseau (19) des consommateurs (9, 13) respectivement associés sont reliés,
- dans lequel au premier point de connexion réseau (15) et aux deuxièmes points de connexion réseau (17a, 17b, 17c) ainsi qu'à au moins un des troisièmes points de connexion réseau (19), la tension actuelle respective est enregistrée comme valeur de tension mesurée (Uₙ),
- dans lequel une consommation de puissance réactive ou une alimentation en puissance réactive du générateur d'énergie (PV) est déterminé en combinant les valeurs de tension mesurées (Uₙ) et l'emplacement géographique (Pₙ) des points de connexion réseau correspondants (15, 17, 19), et
- dans lequel, dans le cadre de la gestion de la puissance réactive, la puissance réactive déterminée est introduite dans le réseau d'alimentation électrique (1) ou la puissance réactive déterminée est retirée du réseau d'alimentation électrique (1), la puissance réactive étant obtenue ou introduite par le fournisseur d'énergie géographiquement le plus approprié afin de stabiliser la tension à ce point de connexion réseau (15, 17, 19).

2. Procédé selon la revendication 1, dans lequel la distance géographique d'un consommateur périphérique (9, 13) à un point de connexion réseau (15, 17, 19), en particulier au point de connexion réseau le plus proche (15, 17, 19) servant de point de mesure de la tension (15a à 15e, 17a à 17c, 19), est déterminée et la distance déterminée est utilisée pour calculer la consommation de puissance réactive ou l'alimentation de puissance réactive.

3. Procédé selon la revendication 2, dans lequel, dans le cas de plusieurs générateurs d'énergie (PV), le générateur d'énergie (PV) le plus proche du consommateur périphérique (9, 13) est utilisé pour la consommation de puissance réactive ou l'alimentation de puissance réactive.

4. Procédé selon l'une des revendications 1 à 3, dans lequel sur la base des valeurs de tension mesurées (Uₙ) un diagramme de tension géographique représentant le niveau de tension dans le réseau d'alimentation électrique (1) est établi, l'alimentation en puissance réactive ou la consommation de puissance réactive dans le réseau d'alimentation électrique (1) étant régulé de telle sorte que la tension dans le réseau d'alimentation électrique (1) ne dépasse ni ne tombe en dessous d'une valeur prédéterminée ou pouvant être prédéterminée à aucun point de connexion réseau (15, 17, 19).

5. Procédé selon la revendication 4, dans lequel les informations sur la capacité disponible du ou de chaque générateur d'énergie (PV) sont utilisées pour l'alimentation en puissance réactive ou la consommation de puissance réactive.

6. Procédé selon la revendication 4 ou 5, dans lequel le rapport de transformation entre les niveaux de tension (0,4kV, 20kV) est modifié et/ou la puissance du générateur d'énergie (PV) est modifiée lorsque le contrôle de l'alimentation en puissance réactive ou la consommation de puissance réactive est épuisé.

7. Procédé selon l'une des revendications 4 à 6, dans lequel l'alimentation en puissance réactive ou la consommation de puissance réactive est contrôlé de telle manière qu'une transition de puissance réactive au deuxième point de connexion (17) ne dépasse pas une valeur limite prédéterminée ou pouvant être prédéterminée.

8. Procédé pour la stabilisation d'un réseau d'alimentation électrique (1) avec un premier niveau de tension (0,4kV) et un deuxième niveau de tension (20kV) et avec un premier point de connexion (15) à un générateur d'énergie (PV) du premier niveau de tension (0,4kV) et avec des deuxièmes points de connexion réseau (17a, 17b, 17c) reliés au deuxième niveau de tension (20kV) par l'intermédiaire de transformateurs (T1 à T3) dont le rapport de transformation est variable, et avec un certain nombre de troisièmes points de connexion réseau (19) à des consommateurs respectivement attribués (9, 13),
- dans lequel des moyens sont prévus pour détecter la tension actuelle respective au premier point de connexion réseau (15) et aux deuxièmes points de connexion réseau (17a, 17b, 17c) et à au moins un des troisièmes points de connexion réseau (19), et
- dans lequel une unité de régulation et de contrôle (25) est prévue et mise en place pour l'exécution de la Procédé selon l'une des revendications 1 à

9. Dispositif selon la revendication 8, dans lequel plusieurs générateurs d'énergie régénérative (PV), en particulier avec un onduleur ou un générateur, sont prévus, qui sont reliés au réseau d'alimentation électrique (1) par des premiers points de connexion réseau (15) respectivement attribués.

10. Dispositif selon la revendication 8 ou 9, dans lequel une pluralité de transformateurs (T1 à T3) sont connectés au réseau d'alimentation électrique (1) au deuxième niveau de tension (20kV) par l'intermédiaire de deuxièmes points de connexion (17) respectivement attribués.
